# EUROPEAN PATENT SPECIFICATION

(11) **EP 3 037 646 B1**
(45) Date of publication and mention of the grant of the patent: **01.08.2018**
(21) Application number: 14199711.4
(22) Date of filing: 22.12.2014
(51) Int. Cl.: F02D 19/06, F02B 19/10, F02D 19/10, F02D 41/00

(54) **Method for operating internal combustion engines**
Verfahren zum Betrieb von Verbrennungsmotoren
Procédé pour faire fonctionner des moteurs à combustion interne

(43) Date of publication of application: 29.06.2016
(73) Proprietor: Caterpillar Motoren GmbH & Co. KG, 24159 Kiel (DE)
(72) Inventor: Sixel, Eike Joachim, 24109 Kiel (DE); Holst, Hauke, 24161 Altenholz (DE); Banck, Andreas, 24161 Altenholz (DE); Ruschmeyer, Kai, 27389 Fintel (DE); Dreves, Jan, 24159 Kiel (DE)
(74) Representative: BRP Renaud & Partner mbB Rechtsanwälte Patentanwälte Steuerberater

(56) References cited:
- WO-A1-2011/015329
- CA-A1- 2 798 599
- US-A- 5 024 193

## Description

### Technical Field

The present disclosure generally relates to a method for operating internal combustion engines, in particular internal combustion engines operating at least partly on gaseous fuel, such as, for example, gaseous fuel internal combustion engines and duel fuel engines.

### Background

A known problem of operating an internal combustion engine is the generation of harmful nitrogen oxides. Those nitrogen oxides may form during combustion as a result of high peak combustion temperatures. Accordingly, reducing the peak combustion temperatures during combustion may generally reduce the formation of nitrogen oxides. For this reason, lean air fuel mixtures such as lean gaseous fuel air mixtures are used. A lean air fuel mixture has a relatively large air-to-fuel ratio compared to a fuel mixture having stoichiometric air-to-fuel ratio.

Operating an internal combustion engine with a relatively large air-to-fuel ratio (lean mixture) may result in an incomplete combustion within the main combustion chamber due to the relatively slow rate of flame propagation from a single point ignition source, such as a spark plug. Furthermore, a poor ignitability may result from the lean mixture. Particularly, large-bore engines may suffer from those effects.

To improve the ignitability of lean burn gaseous fuel internal combustion engines, the same may be provided with pre-chambers (also referred to as pre-combustion chambers). For example, such a pre-chamber may be fluidly connected to a main combustion chamber of a respective cylinder via, for example, a plurality of flow transfer passages, but at least one. Those flow transfer passages allow flow of a lean mixture of gaseous fuel and air from the main combustion chamber into the pre-chamber during a compression stroke. Enrichment of the lean mixture in the pre-chamber is typically effected by providing a small quantity of gaseous fuel into the pre-chamber via a separate gas feed passage. The enriched mixture is ignited in the pre-chamber by an igniter such as a spark plug. Ignition of the enriched mixture causes a flame front of hot gases that propagates from the pre-chamber via the flow transfer passages into the main combustion chamber. Thus, the lean mixture in the main combustion chamber ignites and burns, and, thereby, expands against a movable piston that drives a crankshaft.

For example, US Patent 5,024,193 of Caterpillar Inc. discloses a fuel combustion system with a pre-combustion chamber assembly defining a pre-chamber. The pre-chamber has a pre-selected shape and volume. A plurality of ejection passages of pre-selected geometric cross-section is provided for directing and controllably expanding burning gases from the pre-chamber into a main combustion chamber at a velocity greater than speed of sound.

WO 2011/015329 A discloses a gas engine comprising a combustion chamber, a prechamber that is at least temporally connected to the combstuion chamber, a gas supply for feeding fuel gas into the prechamber during an intake stroke of the engine, and an ignition device for igniting the fuel gas present in the prechamber.

A further combustion system including a main combustion chamber and a precombustion chamber is disclosed in US 5 024 193 A.

The present disclosure is directed, at least in part, to improving or overcoming one or more aspects of prior systems.

### Summary of the Disclosure

According to an aspect of the present disclosure, a method for operating an internal combustion engine operating at least partly on gaseous fuel is disclosed. The internal combustion engine may have a main combustion chamber and at least one pre-combustion chamber assembly with a pre-combustion chamber in fluid communication with the at least one main combustion chamber via at least one flow transfer passage. The internal combustion engine may further include a gaseous fuel supply channel for supplying gaseous fuel into the pre-combustion chamber, and an ignition fuel injector for supplying liquid ignition fuel into the pre-combustion chamber for initiating an ignition event within the pre-combustion chamber. The method may comprise supplying a predefined amount of gaseous fuel into the pre-combustion chamber via the at least one gaseous fuel supply channel for enriching the pre-combustion chamber with gaseous fuel at times between about 210° crankangle before the top dead center and about 180° crankangle after the top dead center during the exhaust stroke and the intake stroke of the internal combustion engine, and supplying a predefined amount of liquid ignition fuel into the gaseous fuel enriched pre-combustion chamber via the at least one ignition fuel injector.

According to a further aspect of the present disclosure, an internal combustion engine operating at least partly on gaseous fuel is disclosed. The internal combustion engine may comprise at least one cylinder movably accommodating an associated piston. The at least one cylinder and the associated piston may define a main combustion chamber for combusting an air/fuel mixture therein. The internal combustion engine may further comprise at least one pre-combustion chamber assembly including a pre-combustion chamber fluidly connected to the main combustion chamber via at least one flow transfer passage. The at least one pre-combustion chamber assembly may further including an ignition fuel injector configured to supply a predefined amount of igniton fuel, such as, for example, Diesel fuel, to the pre-combustion chamber, and a gaseous fuel supply channel configured to supply a predefined amount of gaseous fuel to the pre-combustion chamber. The internal combustion engine may further comprise a control unit configured to operate the gasous fuel internal combustion engine according to the method of the present disclosure.

Other features and aspects of this disclosure will be apparent from the following description and the accompanying drawings.

### Brief Description of the Drawings

Fig. 1 is a schematic drawing of an upper section of an engine cylinder covered by a cylinder head only shown in part as well, the cylinder head comprising a pre-chamber assembly;
Fig. 2 is a schematic drawing of adisclosure pre-combustion chamber assembly;
Fig. 3 is a schematic drawing of a dual fuel internal combustion engine including two pre-combustion chamber assemblies of Fig. 2,
Fig. 4 is a schematic diagram illustrating timings of the injection of ignition fuel and gaseous fuel under low pressure into the pre-combustion chamber with respect to the crankangle; and
Fig. 5 is a schematic diagram illustrating timings of the injection of ignition fuel and gaseous fuel under high pressure into the main combustion chamber or the pre-combustion chamber with respect to the crankangle.

### Detailed Description

The following is a detailed description of exemplary embodiments of the present disclosure. The exemplary embodiments described therein and illustrated in the drawings are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of patent protection. Rather, the scope of patent protection shall be defined by the appended claims.

Generally, the present disclosure may be based at least in part on the realization that enriching a combustion mixture within an ignition region defined by an outlet of a liquid ignition fuel injector with gaseous fuel and igniting the enriched combustion mixture by suppling a predefined amount of liquid ignition fuel, such as, for instance, Diesel fuel, into the ignition region may reduce the total amount of ignition fuel necessary for initiating an ignition event, while the air-to-fuel ratio within the ignition region may be also reduced.

The present disclosure may be based further at least in part on the realization that enriching a combustion mixture within a main combustion chamber or a pre-combustion chamber with gaseous fuel and igniting the enriched combustion mixture by suppling a predefined amount of liquid ignition fuel, such as, for instance, Diesel fuel, into the main combustion chamber or the pre-combustion chamber may reduce the total amount of ignition fuel necessary for initiating an ignition event, while the air-to-fuel ratio within the at least one main combustion chamber may be also reduced. Operating an internal combustion engine according to the present disclosure may reduce NOx-emissions, while the engine efficiency may be maintained or increase the efficiency while the NOx-emissions may be maintained.

The present disclosure may be further based at least in part on the realization that the above-mentioned concept may be also applicable to a dual fuel internal combustion engine. In such case, at least one pre-combustion chamber assembly may be provided which is disposed with an offset with respect to a main liquid fuel injector centrially disposed with respect to an associated main combustion chamber. The pre-combustion chamber may be operated by enriching the combustion mixture with gaseous fuel and igniting the enriched combustion mixture with a predefined amount of ignition fuel, such as, for example, Diesel fuel. The at least one pre-combustion chamber assembly may include at least one transfer passage generally oriented towards the center region of the main combustion chamber .

The present disclosure may be further based at least in part on the realization that providing pressurized gaseous fuel into an ignition region in the pre-combustion chamber may lead to an at least partially stratified air/fuel mixture within the pre-combustion chamber. An at least partially stratified air/fuel mixture within the pre-combustion chamber may be characterized by having a combustion mixing in the pre-combusion chamber, that is that there is a plurality of different portions within the pre-combustion chamber which have different air-to-fuel ratios or Lambda values. A mixing gradient in the pre-combustion chamber may lead or result in a mixing gradient in the main combustion chamber. Due to the pre-combusion chamber enriched with pressurized gaseous fuel directly at the ignition region in combination with a lean mixture in the rest of the combustion chamber, generation of NOx may be significantly reduced.

The Lambda value describes a ratio of air to fuel with respect to a stoichiometric mixture. A stoichiometric mixture includes a desired amount of air sufficient for theoterically completely combusting the provided amount of fuel. Such air-to-fuel ratio describes a Lambda value of one (λ = 1). At λ > 1, it is referred to as a lean mixture, and at λ < 1, it is referred to as a rich mixture.

Although described in the following with respect to a pre-combustion combustion assembly, the exemplary disclosed concept of supplying gaseous fuel to an ignition region of an ignition fuel injector may also be applicable to an ignition fuel injector having an ignition region disposed directly in a main combustion chamber of the internal combustion engine. In other words, the exemplary disclosed concept is also applicable to an internal combustion engine running at least partly on gaseous fuel and not provided with a pre-combustion chamber assembly. Hence, gaseous fuel may be directly supplied to the ignition region disposed in the main combustion chamber.

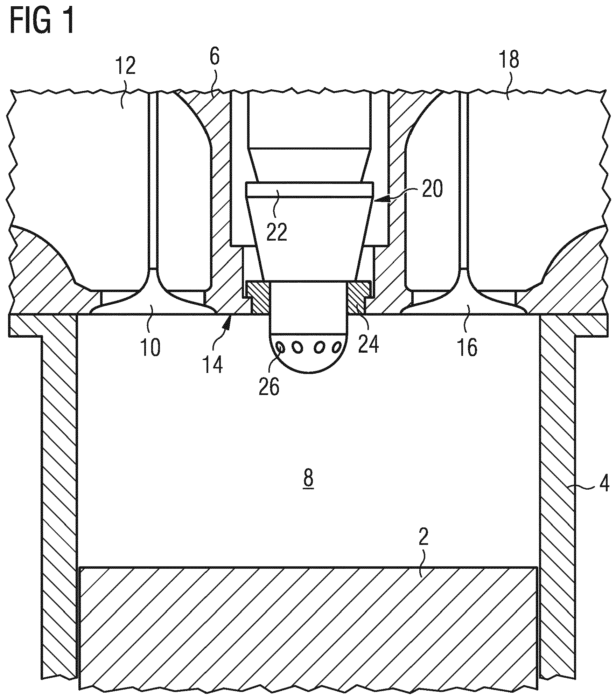

Referring now to the drawings to explain the general principle of the present disclosure by way of example. Fig. 1 depicts a piston 2 movably arranged in a cylinder or cylinder liner 4 of a gaseous fuel internal combustion engine (not shown in further detail). The cylinder 4 is covered by a cylinder head 6. The piston 2, the cylinder 4, and the cylinder head 6 together define a main combustion chamber 8 of the internal combustion engine.

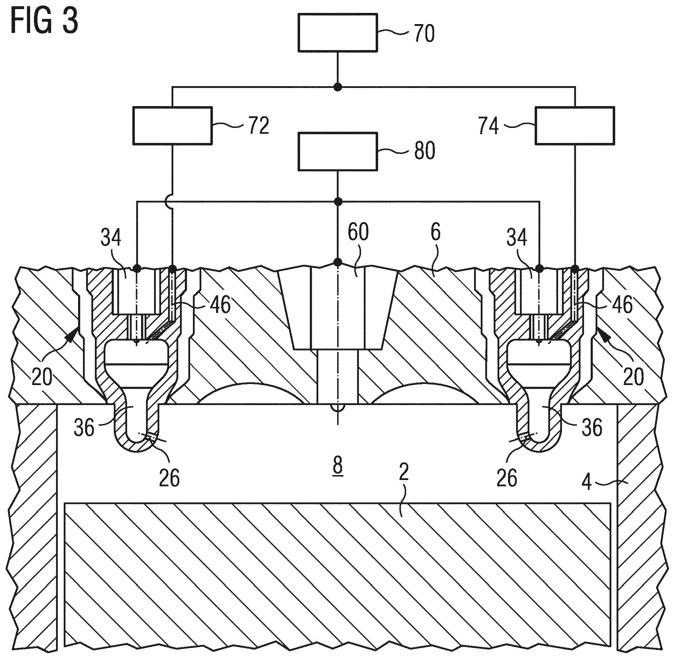

The piston 2 is reciprocatingly arranged in the cylinder 4 to move between a top dead center (TDC) and a bottom dead center (BDC) during operation of the internal combustion engine. For the purposes of the present disclosure, the internal combustion engine is considered as a four-stroke internal combustion engine operating at least partly on gaseous fuel such as a gaseous fuel engine (see Fig. 1) or a dual fuel engine (see Fig. 3). One skilled in the art will recognize, however, that the internal combustion engine may be any type of engine that would at least partially operate on gaseous fuel. Furthermore, the internal combustion engine may be of any size, with any number of cylinders, and in any configuration (V-type, in-line, radial, etc.). Moreover, the internal combustion engine may be used to power any machine or other device, including locomotive applications, on-highway trucks or vehicles, off-highway trucks or machines, earth moving equipment, generators, aerospace applications, marine applications, pumps, stationary equipment, or other engine powered applications.

The cylinder head 6 includes at least one inlet valve 10, for example a poppet valve. The inlet valve 10 is accommodated in an inlet channel 12 opening in a piston sided face 14 of the cylinder head 6 for supplying a lean mixture of gaseous fuel and air into the main combustion chamber 8. Similarly, at least one outlet valve 16, for example also a poppet valve, is accommodated in an outlet channel 18 of the cylinder head 6 to guide exhaust gas out of the main combustion chamber 8.

According to the embodiment shown in Fig. 1, the cylinder head 6 may further comprise a pre-combustion chamber assembly 20 including a pre-combustion chamber body 22 as is described in greater detail later on. At least one of flow transfer passage 26 fluidly connects a pre-combustion chamber 36 (not visible in Fig. 1) within the pre-combustion chamber assembly 20 and the main combustion chamber 8 of the cylinder 4. However, the exemplary disclosed ignition system may also be applicable to internal combustion engines that at least partly operate on gaseous fuel, such as, for instance, natural gas, and that does not utilize a pre-combustion chamber assembly 20 for promoting the combustion process within the main combustion chamber 8.

The pre-combustion chamber assembly 20 is installed in the cylinder head 6 via a mounting body 24 as shown in Fig. 1. Alternatively, the pre-combustion chamber assembly 20 may be installed in the cylinder head 6 in any other fashion.

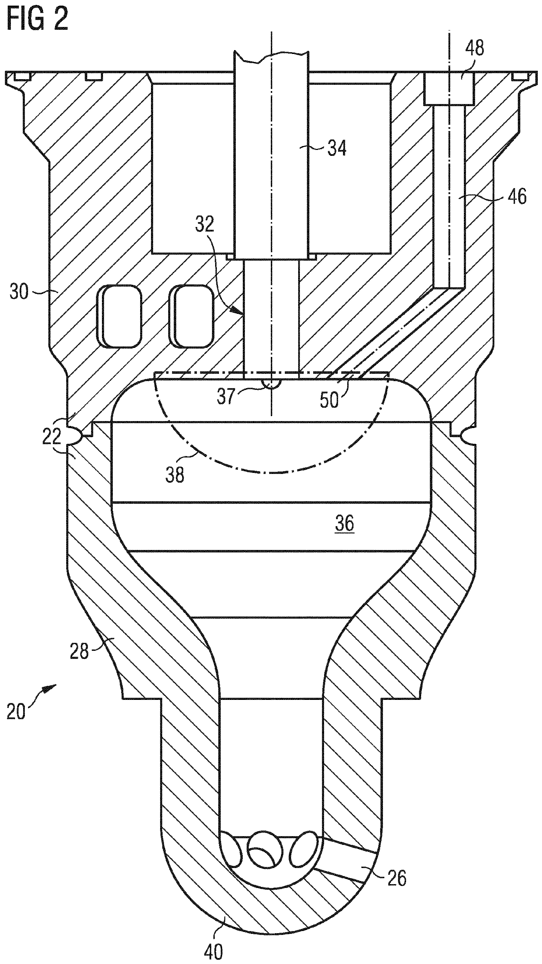

Referring to Fig. 2, an exemplary embodiment of the pre-combustion chamber assembly 20 is shown in a schematic sectional view.

The pre-combustion chamber assembly 20 includes pre-combustion chamber body 22, which is formed of a first or lower body part (pre-combustion chamber tip) 28 and a second or upper body part (pre-combustion chamber support) 30. Furthermore, the pre-combustion chamber assembly 20 includes an ignition fuel injector mounting section 32 for removably accommodating an ignition fuel injector 34.

The pre-combustion chamber body 22 includes and defines a pre-combustion chamber 36 and the flow transfer passages 26. The pre-combustion chamber 36 is funnel-shaped and tapers in direction to the main combustion chamber 8. Alternatively, the pre-combustion chamber 36 may have any other shape such as a cylindrical shape, pyramidal shape, conical shape, and combinations thereof. For example, the pre-combusiton chamber 36 may have a volume ranging from about 0.1 % to about 20 % of the compression volume (when the piston 2 is in the TDC) of the cylinder 4 (see Fig. 1).

To fluidly connect the pre-combustion chamber 36 to the main combustion chamber 8 (see Fig. 1), the flow transfer passages 26 are provided. The flow transfer passages 26 extend through a tip 40 of the pre-combustion chamber body 22 along respective flow passage axes. Further, the flow transfer passages 26 may include a step-like shape and may have roundings and/or chamfers at their respective inlets and/or outlets.

The tip 40 may be dome-shaped, or may be flattened or otherwise curved. In some embodiments, the tip 40 may reach into the main combustion chamber 8, or may be at least partially arranged in a cavity provided in the face 14 of cylinder head 6 (see Fig. 1).

The ignition fuel injector34is at least partially installed in the pre-combustion chamber assembly 20 and mounted to the ignition fuel injector mounting section 32. Specifically, the ignition fuel injector 34 is operably connected to the pre-combustion chamber 36 and is configured to supply/inject a predefined amount of ignition fuel, such as, for instance, Diesel fuel, into the pre-combustion chamber 36. Operably connected as used herein means that the ignition fuel injector 34 isconfigured and arranged to ignite an ignitable mixture in the pre-combustion chamber 36.

As shown in Fig. 2, the ignition fuel injector 34 has an injection portion 37 where ignition fuel is injected into the pre-combustion chamber 36 and an ignition event is initiated. The ignition fuel injector 34 includes an ignition region 38 including and substantially surrounding the injection portion 37. For example, the ignition region 38 may surround the injection portion 37 with distance ranging from about 0.1 mm to about 250 mm. That is that the ignition region 38 is a portion that includes and closely surrounds the injection portion 37 where the ignition event is initiated.

In the example shown in Fig. 3, the ignition region 38 is part of the pre-combustion chamber 36. However, in some embodiments in which no pre-chamber is provided, the ignition region 38 may be part of, for instance, the main combustion chamber 8.

The pre-combustion chamber assembly 20 further includes a gaseous fuel supply channel 46 opening into the ignition region 38 for supplying gaseous fuel to the ignition region 38 for enriching the same with gaeous fuel. In the embodiment shown in Fig. 2, the gaseous fuel supply channel 46 fully extends through the pre-combustion chamber body 22, particularly through the upper pre-chamber part 30, from an inlet port 48 to an outlet 50 opening into the ignition region 38. However, in some embodiments in which no pre-chamber is provided, the gaseous fuel supply channel 46 may fully extend through the cylinder head 6, also from an inlet port (similar to the inlet port 48) to an outlet (similar to the outlet 50) opening into the ignition region 38.

For example, a fuel supply line (not shown in Fig. 2) may be connected to the inlet port 48. Additionally, at least one control valve (not shown in Fig. 2) may be installed in or fluidly connected upstream of the gaseous fuel supply channel 46 to control the amount of gaseous fuel supplied to the ignition region 38 via the gaseous fuel supply channel 46. Furthermore, at least one valve (not shown in Fig. 2), such as, for example, an electromagnetic valve or a check valve, may be installed in or fluidly connected upstream of the gaseous fuel supply channel 46 to selectively allow or disallow a flow of gaseous fuel from a fuel supply, through the gaseous fuel supply channel 46, and into the ignition region 38.

The ignition fuel injector 34 may supply a predefined amounf of ignition fuel, such as, for example, Diesel fuel, into the pre-combustion chamber at times ranging, for instance, between 20° to about 0°, particularly from about 10° to about 2° crankangle before TDC during the compression stroke. The ignition fuel may be supplied under a preset pressure ranging from about 100 bar to about 5000 bar.

The gaseous fuel supply channel 46 may be configured to supply gaseous fuel into the pre-combustion chamber 36 under a preset pressure ranging, for example, between about 0.5 bar to about 30 bar, in particular from about 0.5 bar to about 6 bar. In such case, the gaseous fuel is supplied to the pre-combustion chamber 36 at times between, for example, about 210° crankangle before TDC to about 180° crankangle after TDC of the charge air exchange. The gaseous fuel may be supplied during an exhaust stroke and/or an intake stroke of the internal combustion engine.

In the example mentioned above, the gaseous fuel may be supplied under low pressure. However, in some embodiments, the gaseous fuel may be supplied to the pre-combustion chamber 36 under high pressure. For instance, the preset pressure of the high pressure gaseous fuel may range, for example, from about 50 % to about 250 % of a maximum compressing pressure of the air/fuel mixture within the main combustion chamber 8. For example, the preset pressure of the gaseous fuel supplied to the pre-combustion chamber 36 may range from about 30 bar to about 250 bar, particularly from about 70 bar to about 90 bar.

The high pressure gaseous fuel may be supplied into the pre-combustion chamber 36 at times ranging from, for example, about 100° to about 0°, in particular from about 40° to about 10° before TDC during the compression stroke.

The gaseous fuel supply channel 46 may have a diameter ranging from, for example, about 0.1 mm to about 10 mm. Due to the small diameters of the gaseous fuel supply channel 46, any flames generated during an ignition may only partially penetrate into the gaseous fuel supply channel 46 and may be extinguished prior penetrating too deep into the gaseous fuel supply channel 46. This may protect the upstream arranged control valves and/or check valves from the flames and a high temperature and, hence, may ensure proper operation of the respective control valves and check valves.

In some embodiments, the ignition fuel injector 34 and the gaseous fuel supply channel 46 may be separately provided, for example as shown in Fig. 2. Alternatively, the ignition fuel injector 34 and the gaseous fuel supply channel 46 may be provided as an integrated unit. In such case, the gaseous fuel supply channel 46 may extend at least partially through the ignition fuel injector 34.

With reference to Fig. 3, a portion of dual fuel engine employed with two pre-combusion chamber assemblies 20 is shown. The dual fuel internal combustion engine can be operated in a liquid fuel mode in which a mixture of liquid fuel and air is combusted, and a gaseous fuel mode in which mainly a mixture of gaseous fuel and air is combusted.

Fig. 3 depicts the piston 2 movably arranged in the cylinder or cylinder liner 4 of the dual fuel internal combustion engine. The cylinder 4 is covered by the cylinder head 6. The piston 2, the cylinder 4, and the cylinder head 6 together define the main combustion chamber 8 of the internal combustion engine.

The cylinder head 6 includes at least one main liquid fuel injector 60 centrally disposed with respect to the main combustion chamber 8 and configured to supply liquid fuel, such as, for example, heavy fuel oil or Diesel fuel, into the main combustion chamber 8 during operation in the liquid fuel mode of the dual fuel internal combustion engine. The cylinder head 6 further includes two inlet valves, such as, for example, poppet valves 10 of Fig. 1 (not visible in Fig. 3). Similarly to Fig. 1, the inlet valves 10 are accommodated in respective inlet channels opening in a piston sided face of the cylinder head 6 for supplying a lean mixture of gaseous fuel and air into the main combustion chamber 8 during the gaseous fuel mode of the dual fuel internal combustion engine. Similarly, at least one outlet valve, for example poppet valves 16 of Fig. 1 (not visible in Fig. 3), are accommodated in respective outlet channels of the cylinder head 6 to guide exhaust gas out of the main combustion chamber 8.

The inlet channels may be further configured to guide charged air into the main combustion chamber during the liquid fuel mode of the dual fuel internal combustion engine.

According to the embodiment shown in Fig. 3, the cylinder head 6 comprises at least one pre-combustion chamber assembly 20. In the specific embodiment of Fig. 3, the cylinder head 6 includes two pre-combustion chamber assemblies 20 which are constructed as shown in Fig. 2. The pre-combustion chamber assemblies 20 are symmetrically disposed in the cylinder head 6 with respect to the main liquid fuel injector 60 and with respect to the main combustion chamber 8. In some embodiments, one of the at least two pre-combustion chamber assembly 20 may be disposed between the two inlet channels (not visible in Fig. 3), and the another one of the at least two pre-combustion chamber assembly 20 may be disposed between the two outlet channels (not visible in Fig. 3). In some further embodiments, there may be more than two pre-combustion chamber assemblies 20 symmetrically disposed in the cylinder head 6 with respect to the main liquid fuel injector 60.

In case that more than one pre-combustion chamber assembly 20 is provided as shown in Fig. 3, the plurality of flow transfer passages 26 are aligned such that the flames generated within the respective pre-combustion chambers 36 are advanced towards the central portion of the main combustion chamber 8, namely from the outside to the inside.

Each of the pre-combustion chamber assemblies 20, particularly each of the gaseous fuel supply channels 46, is fluidly connected to a gaseous fuel source 70. Control valves 72 and 74 are respectively provided for controlling the flow of gaseous fuel from the gaseous fuel source 70 to the respective pre-combustion chamber 36.

Each of the pre-combustion chamber assemblies 20, particularly each of the ignition fuel injectors 34, as well as the main liquid fuel injector 60 are fluidly connected to a liquid fuel source 80 configured to store liquid fuel, such as, for example, Diesel fuel. In some embodiments, the main liquid fuel injector 60 may be connected to a separate liquid fuel source (not explicitly shown in Fig. 3) configured to store liquid fuel, such as, for example, heavy fuel oil.

### Industrial Applicability

The method for operating internal combustion engines as generally disclosed herein is applicable in internal combustion engines running at least partly on gaseous fuel. Particularly, the disclosed method is applicable in gaseous fuel internal combustion engines operating on a lean mixture of gaseous fuel and air for reducing the generation and emission of nitrogen oxides and/or improving ignition reliability. However, the above-described concept of at least partially enriching the ignition region that is either provided in a pre-combustion chamber or a main combustion chamber may also be applicable to dual fuel internal combustion engines.

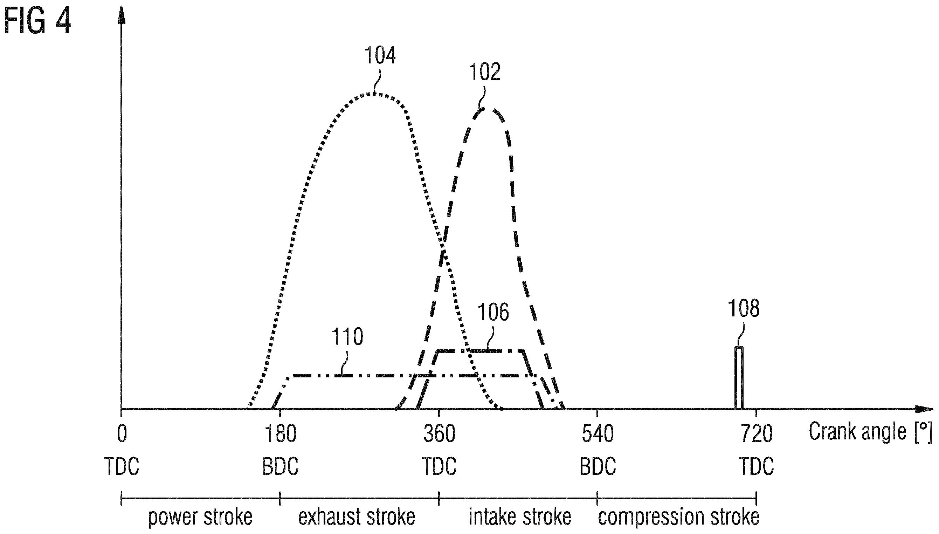

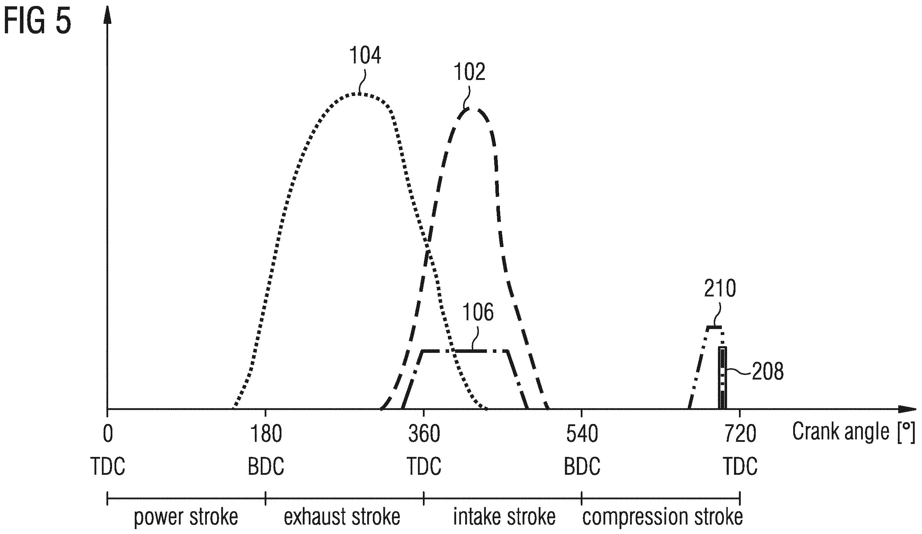

In the following, operation of a gaseous fuel internal combustion engine including a pre-combustion chamber assembly 20 is exemplary described with reference to the drawings, especially with respect to Figs. 4 and 5.

Figs. 4 and 5 illustrate schematic diagrams of valve timings and injection timings with respect to crankangle. Specifically, the abscissa shows the crankangle and the ordinate shows a magnitude of valve and injector openings. Fig. 4 illustrates an embodiment in which the additional gaseous fuel is supplied into the pre-combustion chamber 36 under low pressure, wherein Fig. 5 shows an embodiment in which the additional gaseous fuel is supplied into the pre-combustion chamber 36 under high pressure.

In Figs. 4 and 5, the dashed lines 102 show timings and magnitudes of intake valve openings, wherein the dotted lines 104 show timings and magnituedes of exhaust valve openings. Further, the dashed-dotted lines 106 of Figs. 4 and 5 show timings and magnitudes of the main supply of gaseous fuel into the main combustion chamber 8. The solid lines 108, 208 of Figs. 4 and 5 show timings and magnitudes of the supply of liquid ignition fuel into the pre-combustion chamber 36 by the ignition fuel injector 34, and the dashed-two-dotted lines 110, 210 show timings and magnitudes of the supply of additional gaseous fuel into the pre-combustion chamber 36 via the gaseous fuel supply channel 46.

In Figs. 4 and 5, the portion between 0° and 720° illustrates a complete four stroke combustion cycle. In particular, the portion between 0° and 180° crankangle describes a power stroke/expansion stroke of the internal combustion engine. The portion between 180° and 360° crankangle describes an exhaust stroke of the internal combustion engine. The portion between 360° and 540° crankangle describes an intake stroke of the internal combustion engine. The portion between 540° and 720° crankangle describes a compression stroke of the internal combustion engine. Thus, at 0°, 360° and 720°, the piston 2 is at the top dead center (TDC), wherein at 180° and 540°, the piston 2 is at the bottom dead center (BDC).

Regarding Figs. 4 and 5, during an end portion of the exhaust stroke and/or during the intake stroke, a lean air/gaseous fuel mixture is supplied to the main combustion chamber 8 via the inlet valve 10 (see dashed-dotted lines 106 in Figs. 4 and 5). In particular, the lean air/gaseous fuel mixture is supplied to the main combustion chamber 8 at times between about 10° crankangle before the TDC and about 100° crankangle after the TDC during the intake stroke of the internal combustion engine.

After closing the inlet valve 10 (see dashed lines 102 in Figs. 4 and 5), the compression stroke may start wherein the piston 2 moves from BDC towards TDC. During the movement of the piston 2 (i.e. during the compression stroke), the lean air/fuel mixture may be at least partially pushed into the pre-combustion chamber 36 via the plurality of flow transfer passages 26 and may be continuously compressed to a maximum motored compressing pressure. The maximum motored compressing pressure describes the pressure of the air/fuel mixture within the main combustion chamber 8 at the end of the compression stroke during an engine cycle without an ignition event. For instance, the maximum motored compressing pressure may range from about 35 bar to about 170 bar.

The leaner air/fuel mixture may be provided to the main combustion chamber 8 with a Lambda value ranging from, for example, about 1.2 to about 3.5. At the end of the compression stroke, the air/fuel mixture within the main combustion chamber 8 and the pre-combustion chamber 36 may have the above-identified compressing pressure.

With respect to Fig. 4, the additioinal gaseous fuel is supplied into the pre-combusiton chamber 36 under low pressure at times between about 210° before TDC and about 180° after TDC during the exhaust stroke and/or the intake stroke. In such case, the gaseous fuel may be configured to enrich the pre-combustion chamber, especially the ignition region 38 with gaseous fuel.

The gaseous fuel may then at least partially mix with the lean air/fuel mixture pushed out of the main combustion chamber 8 into the pre-combustion chamber 26 by the upward movement of the piston 2 during the compression stroke.

Then, a predefined amount of liquid ignition fuel is supplied into the pre-combustion chamber 36 via the ignition fuel injector 34. For example, the self-igniting liquid ignition fuel, such as, for instance, Diesel fuel, is supplied into the gaseous fuel enrichted pre-combustion chamber 36, for example, at times between about 20° and 0° crankangle and particularly at times between about 10° and 2° crankangle before TDC during the compression stroke (see solid line 108 in Fig. 4).

The low pressure gaseous fuel may be supplied at a pressure ranging from about -2.5 bar to about 25 bar above the intake channel pressure. In such case, the preset pressure of the gaseous fuel may range from about 0.5 bar to about 30 bar, in particular from about 0.5 bar to about 6 bar.

The pressure increase within the main combustion chamber 8 and the pre-combustion chamber 36 during the compression stroke leads to a self-ignition of the injected liquid ignition fuel, which in turn ignites the mixture of gaseous fuel and air within the pre-combustion chamber 36. Then, the flames advance through the flow transfer passages 26 into the main combustion chamber 8 and may ignite the main combustion mixture of gaseous fuel and air within the main combustion chamber 8.

In some embodiments, regarding Fig. 5, the gaseous fuel for enriching the combustion mixture within the ignition region 38 in the pre-combustion chamber 36 may be supplied under high pressure. In some embodiments, for example, internal combustion engines without pre-combustion chamber assemblies, the ignition region may be disposed within the main combustion chamber in the vicinity of the outlet of the ignition fuel injector. For instance, in both cases with and without a pre-combustion chamber assembly, the high pressure gaseous fuel is supplied into the ignition region at times ranging between, for instance, 100° to about 0°, particularly between about 40° to about 10° before TDC (see dashed-two-dotted line 210 in Fig. 5).

The high pressure gaseous fuel may be supplied at a pressure ranging from about 50 % to about 250 % of the maximum motored compressing pressure. In such case, the preset pressure may range from about 30 bar to about 250 bar, particularly from about 70 bar to about 90 bar.

In each of the cases shown in Figs. 4 and 5, after having supplied gaseous fuel, the ignition region 38 may be enriched with gaseous fuel and, hence, includes an air-to-fuel ratio less than the air-to-fuel ratio of the lean air/fuel mixture within the main combustion chamber 8 and the pre-combustion chamber 36. Therefore, the pre-combustion chamber 36 or the main combustion chamber may include a stratified charge of combustion mixture, with an enriched combustion mixture in the ignition region 38 and a leaner combustion mixture in the rest of the combustion chamber. The amount of gaseous fuel supplied to the ignition region 38 is controlled, such that Lambda value within the ignition region 38 ranges from about 0.5 to about 1.7, preferably between 0.7 and 0.9.

The ignition event in the embodiment shown in Fig. 5 may be initiated at times ranging between about 30° to about 0°, particularly between about 20° to about 0°, particularly between about 10° to about 2° before the TDC during the compression stroke.

It should be appreciated that the operation process described above may similarly apply to a dual fuel internal combustion engine operating at least partially on gaseous fuel which will be described with respect to Fig. 3.

Referring to Fig. 3, dual fuel internal combustion engines may be operated with different kinds of fuels like heavy fuel oil (HFO), Diesel fuel, gasoline, and natural gas. Specifically, dual fuel internal combustion engines may be operated in either a liquid fuel mode, for example a Diesel fuel mode, and a gaseous fuel mode, for example a natural gas mode.

For the liquid fuel mode, a main liquid fuel injector 60 provides liquid fuel to the charged air within the main combustion chamber 8. Then, the ignition fuel injectors 34 supply a predefined amount of Diesel fuel into the respective pre-combustion chambers 36, without supply of gaseous fuel via the respective gaseous fuel supply channels 46.

For the gaseous fuel mode, gaseous fuel such as natural gas is controllably released into an air intake port connected to the cylinder 4, producing a charge air/gaseous fuel mixture supplied to the main combustion chamber 8. Subsequently or simultaneously, gaseous fuel is supplied into each of the pre-combustion chambers 36 via the respective gaseous fuel supply channels 46 (see dashed-dotted lines 106, 206 in Figs. 4 and 5). Then, the predefined amount of Diesel fuel also referred to as liquid ignition fuel is injected into the pre-combustion chambers 36 via the respective ignition fuel injectors 34 (see solid lines 108, 208 in Figs. 4 and 5). The predefined amount of ignition fuel may be about 0.01 % to about 10 %, preferably about 0.1 % to abut 1 % of the fuel amount injected by the main liquid fuel injector 60 during the liquid fuel mode. The compression ignites the Diesel fuel, which in turn ignites the charge air/gaseous fuel mixture within the pre-combustion chambers 36. Then, the generated flames advance through the pluraltity of flow transfer passages 26 into the main combustion chamber 8, where the leaner main combustion mixture is ignited.

During the gaseous fuel mode, the combustion mixture within the main combustion chamber 8 may have an air-to-fuel ratio ranging between, for example, about 2.0 to about 3.0, wherein the enriched combustion mixture within the pre-combustion chambers 36 may have a Lambda value ranging between,for instance, about 0.5 to about 1.7.

To operate the dual fuel internal combustion engine in the liquid fuel mode and the gaseous fuel mode, a control unit (not explicitly shown in Fig. 3) may control components of the dual fuel internal combustion engine, such as, for example, gaseous fuel admission valves, the intake and exhaust valves 10, 16, the main liquid fuel injectors 60, the control valves 72, 74, and the ignition fuel injectors 34.

It should be noted that the present idea of enriching an ignition region 38 defined by the liquid ignition fuel injector 34 with gaseous fuel may also be applicable to internal combustion engines running at least partly on gaseous fuel and that are not provided with pre-combustion chamber assemblies 20. In such case, the additional gaseous fuel may be supplied into the ignition region of an ignition fuel injectore that supplies ignition fuel directly into the main combustion chamber 8. In such case, the additional gaseous fuel may be supplied into the ignition region under high pressure within the main combustion chamber 8 at times substantially corresponding to Fig. 5.

According to another aspect of the present disclosure, a method for operating an internal combustion engine operating at least partly on gaseous fuel, and having a main combustion chamber, an inlet channel for supplying a mixture of gaseous fuel and air into the main combustion chamber, an ignition region in which an ignition event is initiated, and an enriching gaseous fuel supply channel for supplying gaseous fuel into the ignition region, the method comprising:
supplying a predefined amount of gaseous fuel into the ignition region via the at least one gaseous fuel supply channel for enriching the ignition region with gaseous fuel; and
supplying a predefined amount of liquid ignition fuel into the gaseous fuel enriched ignition region via, for instance, an igniton fuel injector configured to inject, for example, Diesel fuel.

According to a further aspect of the present disclosure, a method for operating an internal combustion engine operating at least partly on gaseous fuel is disclosed. The internal combustion engine may have a main combustion chamber, an inlet channel for supplying a mixture of gaseous fuel and air into the main combustion chamber, a gaseous fuel supply channel for supplying gaseous fuel directly into the main combustion chamber, and an ignition fuel injector for supplying liquid ignition fuel into the main combustion chamber for initiating an ignition event within the main combustion chamber. The method may comprise supplying a predefined amount of gaseous fuel into the main combustion chamber via the at least one gaseous fuel supply channel for enriching the main combustion chamber partly in a small region with gaseous fuel shortly before the ignition event during a compression stroke of the internal combustion engine, and supplying a predefined amount of liquid ignition fuel into the gaseous fuel enriched small region, also referred to as ignition region, via the at least one ignition fuel injector.

According to a further aspect, a method for operating an internal combustion engine operating at least partly on gaseous fuel is disclosed. The internal combustion engine may have a main combustion chamber and at least one pre-combustion chamber assembly with a pre-combustion chamber in fluid communication with the at least one main combustion chamber via at least one flow transfer passage. The pre-combustion chamber assembly may further include a gaseous fuel supply channel for supplying gaseous fuel into the pre-combustion chamber, and an ignition fuel injector for supplying liquid ignition fuel into the pre-combustion chamber for initiating an ignition event within the pre-combustion chamber. The method may comprise supplying a predefined amount of gaseous fuel into the pre-combustion chamber via the at least one gaseous fuel supply channel for enriching the pre-combustion chamber with gaseous fuel, and supplying a predefined amount of liquid ignition fuel into the gaseous fuel enriched pre-combustion chamber via the at least one ignition fuel injector.

In some embodiments, the gaseous fuel ma ybe supplied into the pre-combustion chamber via the gaseous fuel supply channel at times between about 100° to about 0°, in particular from about 40° to about 10° crankangle before the top dead center.

In some further embodiments, the gaseous fuel may be supplied into the pre-combustion chamber via the gaseous fuel supply channel during a compression stroke of the internal combustion engine.

In some further embodiments, the gaseous fuel may be supplied under a preset pressure ranging from about 50 % to about 250 % of a maximum compressing pressure of the air/fuel mixture within the at least one main combustion chamber.

In some further embodiments, the preset pressure of the gaseous fuel supplied into the pre-combustion chamber may range from about 30 bar to about 250 bar, in particular from about 70 bar to about 90 bar.

## Claims

1. A method for operating an internal combustion engine operating at least partly on gaseous fuel, and that has a main combustion chamber (8) and at least one pre-combustion chamber assembly (20) with a pre-combustion chamber (36) in fluid communication with the at least one main combustion chamber (8) via at least one flow transfer passage (26), a gaseous fuel supply channel (46) for supplying gaseous fuel into the pre-combustion chamber (36), and an ignition fuel injector (34) for supplying liquid ignition fuel into the pre-combustion chamber (36) for initiating an ignition event within the pre-combustion chamber (36), the method comprising:
supplying a predefined amount of gaseous fuel into the pre-combustion chamber (36) via the at least one gaseous fuel supply channel (46) for enriching the pre-combustion chamber (36) with gaseous fuel at times between about 210° crankangle before the top dead center and about 180° crankangle after the top dead center during an exhaust stroke and an intake stroke of the internal combustion engine; and
supplying a predefined amount of liquid ignition fuel into the gaseous fuel enriched pre-combustion chamber (36) via the at least one ignition fuel injector (34).

2. The method of claim 1, wherein the predefined amount of ignition fuel is supplied into the gaseous fuel enrichted pre-combustion chamber (36) at times between about 30° to about 0°, particularly between about 10° to about 2° crankangle before the top dead center.

3. The method of any one of the preceding claims, wherein the gaseous fuel is supplied under a preset pressure ranging from about -2.5 bar to about 25 bar above the intake channel pressure or the charge air pressure.

4. The method of claim 3, wherein the preset pressure of the gaseous fuel supplied to the pre-combustion chamber (36) ranges from about 0.5 bar to about 30 bar, in particular from about 0.5 bar to about 6 bar.

5. The method of any one of the preceding claims, wherein the predefined amount of gaseous fuel is supplied into an ignition region (38) provided in the pre-combustion chamber (36) and defined by an outlet region of the ignition fuel injector (34).

6. The method of claim 5, further comprising:
controlling the amount of gaseous fuel supplied to the ignition region (38) to provide a Lambda value within the ignition region (38) ranging from about 0.5 to about 1.7, preferably between 0.7 and 0.9.

7. The method of any one of the preceding claims, further comprising:
supplying main mixture of gaseous fuel and air to the main combustion chamber (8) with a Lambda value ranging from about 1.2 to about 3.5 at times between about 10° crankangle before the top dead center and about 100° crankangle after the top dead center during an intake stroke of the internal combustion engine.

8. An internal combustion engine operating at least partly on gaseous fuel, the internal combustion engine comprising:
at least one cylinder (4) movably accommodating an associated piston (2), the at least one cylinder (4) and the associated piston (2) defining a main combustion chamber (8) for combusting an air/fuel mixture therein;
at least one pre-combustion chamber assembly (20) including a pre-combustion chamber (36) fluidly connected to the main combustion chamber (8) via at least one flow transfer passage (26), the at least one pre-combustion chamber assembly (20) further including an ignition fuel injector (34) configured to supply a predefined amount of igniton fuel, such as, for example, Diesel fuel, to the pre-combustion chamber (36), and a gaseous fuel supply channel (46) configured to supply a predefined amount of gaseous fuel to the pre-combustion chamber (36); and
a control unit configured to operate the gasous fuel internal combustion engine according to the method of any one of the preceding claims.

9. The internal combustion engine of claim 8, wherein the internal combustion engine is a dual fuel internal combustion engine operable in a liquid fuel mode and a gaseous fuel mode, the dual fuel internal combustion engine further comprising:
a main liquid fuel injector (60) centrally disposed with respect to the main combustion chamber (8) and configured to supply a predefined amount of liquid fuel, such as, for example, heavy fuel oil or Diesel fuel, to the main combustion chamber (8) during the liquid fuel mode; and
at least one pre-combustion chamber assembly (20) fluidly connected to the main combustion chamber (8) via at least one flow transfer passage (26) generally oriented towards a center region of the main combustion chamber (8).

## Patentansprüche

1. Verfahren zum Betrieb eines Verbrennungsmotors, der mit mindestens teilweise mit gasförmigem Kraftstoff arbeitet, und der eine Hauptbrennkammer (8) und mindestens eine Vorbrennkammerbaugruppe (20) mit einer Vorbrennkammer (36), die über mindestens einen Strömungsübertragungsdurchgang (26) in Fluidverbindung mit der mindestens einen Hauptbrennkammer (8) steht, einem Versorgungskanal (46) für gasförmigen Kraftstoff zum Versorgen der Vorbrennkammer (36) mit gasförmigem Kraftstoff, und einer Zündkraftstoffeinspritzung (34) zum Versorgen der Vorbrennkammer (36) mit flüssigem Zündkraftstoff, um einen Zündereignis innerhalb der Vorbrennkammer (36) zu initiieren, aufweist, wobei das Verfahren umfasst:
Versorgen der Vorbrennkammer (36) mit einer vordefinierten Menge von gasförmigem Kraftstoff über den mindestens einen Versorgungskanal (46) für gasförmigen Kraftstoff, um die Vorbrennkammer (36) mit gasförmigem Kraftstoff anzureichern, zu Zeiträumen zwischen etwa 210° Kurbelwinkel vor dem oberen Totpunkt und etwa 180° Kurbelwinkel nach dem oberen Totpunkt während eines Auslasstakts und eines Einlasstakts des Verbrennungsmotors; und
Versorgen der mit gasförmigem Kraftstoff angereicherten Vorbrennkammer (36) mit einer vorbestimmten Menge von flüssigem Kraftstoff über die mindestens eine Zündkraftstoffeinspritzung (34).

2. Verfahren nach Anspruch 1, wobei die mit gasförmigem Kraftstoff angereicherte Vorbrennkammer (36) mit der vordefinierten Menge von Zündkraftstoff versorgt wird zu Zeiten zwischen etwa 30° bis etwa 0°, insbesondere etwa 10° bis etwa 2° Kurbelwinkel vor dem oberen Totpunkt.

3. Verfahren nach einem der vorstehenden Ansprüche, wobei der gasförmige Kraftstoff unter einem voreingestellten Druck im Bereich von etwa -2,5 bar bis etwa 25 bar über dem Einlasskanaldruck oder dem Veränderungsluftdruck zugeführt wird.

4. Verfahren nach Anspruch 3, wobei der voreingestellte Druck des gasförmigen Kraftstoffs, mit dem die Vorbrennkammer (36) versorgt wird, im Bereich von etwa 0,5 bar bis etwa 30 bar liegt, insbesondere von etwa 0,5 bar bis etwa 6 bar.

5. Verfahren nach einem der vorstehenden Ansprüche, wobei die vordefinierte Menge von gasförmigem Kraftstoff einem Zündungsbereich (38) zugeführt wird, der in der Vorbrennkammer (36) bereitgestellt und durch einen Ausgabebereich der Zündkraftstoffeinspritzung (34) definiert ist.

6. Verfahren nach Anspruch 5, weiter umfassend:
Regeln der Menge von gasförmigem Kraftstoff, mit der der Zündungsbereich (38) versorgt wird, um einen Lambdawert innerhalb des Zündungsbereichs (38) im Bereich von etwa 0,5 bis etwa 1,7 bereitzustellen, vorzugsweise zwischen 0,7 und 0,9.

7. Verfahren nach einem der vorstehenden Ansprüche,, weiter umfassend:
Versorgen der Hauptbrennkammer (8) mit einem Hauptgemisch aus gasförmigem Kraftstoff und Luft, mit einem Lambdawert im Bereich von etwa 1,2 bis etwa 3,5, zu Zeiten zwischen etwa 10° Kurbelwinkel vor dem oberen Totpunkt und etwa 100° Kurbelwinkel nach dem oberen Totpunkt während eines Einlasstakts des Verbrennungsmotors.

8. Verbrennungsmotor, der mindestens teilweise mit gasförmigem Kraftstoff arbeitet, wobei der Verbrennungsmotor umfasst:
mindestens einen Zylinder (4), der einen zugehörigen Kolben (2) beweglich beherbergt, wobei der mindestens eine Zylinder (4) und der zugehörige Kolben (2) eine Hauptbrennkammer (8) zum Verbrennen eines Luft-Kraftstoff-Gemischs darin definieren;
mindestens eine Vorbrennkammerbaugruppe (20), die eine Vorbrennkammer (36) beinhaltet, die über mindestens einen Strömungsübertragungsdurchgang (26) fluidisch mit der Hauptbrennkammer (8) verbunden ist, wobei die mindestens eine Vorbrennkammerbaugruppe (20) weiter eine Zündkraftstoffeinspritzung (34), die eingerichtet ist, um die Vorbrennkammer (36) mit einer vordefinierten Menge von Zündkraftstoff, wie etwa zum Beispiel Dieselkraftstoff, zu versorgen, und einen Versorgungskanal (46) für gasförmigen Kraftstoff, der eingerichtet ist, um die Vorbrennkammer (36) mit einer vordefinierten Menge von gasförmigem Kraftstoff zu versorgen, beinhaltet; und
eine Regelungseinheit, die eingerichtet ist, um den Verbrennungsmotor für gasförmigen Kraftstoff mit dem Verfahren nach einem der vorstehenden Ansprüche zu betreiben.

9. Verbrennungsmotor nach Anspruch 8, wobei der Verbrennungsmotor ein Dual-Kraftstoff-Verbrennungsmotor ist, der in einem Flüssigkraftstoffmodus und einem Gaskraftstoffmodus betreibbar ist, wobei der Dual-Kraftstoff-Verbrennungsmotor weiter umfasst:
eine Hauptflüssigkraftstoffeinspritzung (60), die in Bezug auf die Hauptbrennkammer (8) mittig angeordnet und eingerichtet ist, um die Hauptbrennkammer (8) während des Flüssigkraftstoffmodus mit einer vordefinierten Menge von flüssigem Kraftstoff, wie etwa zum Beispiel Schweröl oder Dieselkraftstoff, zu versorgen; und
mindestens eine Vorbrennkammerbaugruppe (20), die über mindestens einen Strömungsübertragungsdurchgang (26), der allgemein hin zu einem Mittelbereich der Hauptbrennkammer (8) orientiert ist, mit der Hauptbrennkammer (8) fluidisch verbunden ist.

## Revendications

1. Procédé de fonctionnement d'un moteur à combustion interne opérant au moins en partie sur du combustible gazeux et qui a une chambre de combustion principale (8) et au moins un ensemble de chambre de précombustion (20) avec une chambre de précombustion (36) en communication fluidique avec la au moins une chambre de combustion principale (8) via au moins un passage de transfert de flux (26), un canal d'alimentation en combustible gazeux (46) pour fournir du combustible gazeux dans la chambre de précombustion (36) et un injecteur de carburant d'allumage (34) pour fournir du carburant d'allumage liquide dans la chambre de précombustion (36) afin d'initier un événement d'allumage dans la chambre de précombustion (36), le procédé comprenant :
la fourniture d'une quantité prédéfinie de combustible gazeux dans la chambre de précombustion (36) via le au moins un canal d'alimentation en combustible gazeux (46) pour enrichir la chambre de précombustion (36) de combustible gazeux à des moments compris entre un angle de manivelle d'environ 210° avant le point mort supérieur et un angle de manivelle d'environ 180° après le point mort supérieur au cours d'une course d'échappement et d'une course d'admission du moteur à combustible interne ; et
la fourniture d'une quantité prédéfinie de carburant d'allumage liquide dans la chambre de précombustion (36) enrichie en combustible gazeux via le au moins un injecteur de carburant d'allumage (34).

2. Procédé selon la revendication 1, dans lequel la quantité prédéfinie de carburant d'allumage est fournie dans la chambre de précombustion (36) enrichie en combustible gazeux à des moments compris entre environ 30° à environ 0°, en particulier entre environ 10° et environ 2° d'angle de manivelle avant le point mort supérieur.

3. Procédé selon l'une quelconque des revendications précédentes, dans lequel le combustible gazeux est fourni sous une pression préréglée allant d'environ -2,5 bars à environ 25 bars au-dessus de la pression du canal d'admission ou de la pression d'air de charge.

4. Procédé selon la revendication 3, dans lequel la pression préréglée du combustible gazeux fourni à la chambre de précombustion (36) se situe dans une plage d'environ 0,5 bar à environ 30 bars, en particulier d'environ 0,5 bar à environ 6 bars.

5. Procédé selon l'une quelconque des revendications précédentes, dans lequel la quantité prédéfinie de combustible gazeux est fournie dans une région d'allumage (38) fournie dans la chambre de précombustion (36) et définie par une région de sortie de l'injecteur de carburant d'allumage (34).

6. Procédé selon la revendication 5, comprenant en outre :
la commande de la quantité de combustible gazeux fournie à la région d'allumage (38) pour fournir une valeur lambda dans la région d'allumage (38) allant d'environ 0,5 à environ 1,7, de préférence entre 0,7 et 0,9.

7. Procédé selon l'une quelconque des revendications précédentes, comprenant en outre :
la fourniture d'un mélange principal de combustible gazeux et d'air à la chambre de combustion principale (8) avec une valeur lambda allant d'environ 1,2 à environ 3,5 à des moments compris un angle de manivelle d'environ 10° avant le point mort supérieur et un angle de manivelle d'environ 100° après le point mort supérieur au cours d'une course d'admission du moteur à combustion interne.

8. Moteur à combustion interne fonctionnant au moins en partie sur du combustible gazeux, le moteur à combustion interne comprenant :
au moins un cylindre (4) recevant de manière mobile un piston associé (2), le au moins un cylindre (4) et le piston associé (2) définissant une chambre de combustion principale (8) pour y brûler un mélange d'air et de combustible ;
au moins un ensemble de chambre de précombustion (20) comprenant une chambre de précombustion (36) en communication fluidique avec la chambre de combustion principale (8) via au moins un passage de transfert de flux (26), le au moins un ensemble de chambre de précombustion (20) comprenant en outre un injecteur de carburant d'allumage (34) configuré pour fournir une quantité prédéfinie de carburant d'allumage, tel que, par exemple, du carburant diesel, à la chambre de précombustion (36) et un canal d'alimentation en combustible gazeux (46) configuré pour fournir une quantité prédéfinie de combustible gazeux à la chambre de précombustion (36) ; et
une unité de commande configurée pour faire fonctionner le moteur à combustion interne à combustible gazeux selon le procédé de l'une quelconque des revendications précédentes.

9. Moteur à combustion interne selon la revendication 8, dans lequel le moteur à combustion interne est un moteur à combustion interne à double combustible qui peut opérer en mode de carburant liquide et en mode de combustible gazeux, le moteur à combustion interne à double combustible comprenant en outre :
un injecteur de carburant liquide principal (60) disposé centralement par rapport à la chambre de combustion principale (8) et configuré pour fournir une quantité prédéfinie de carburant liquide tel que, par exemple, du mazout lourd ou du carburant diesel, à la chambre de combustion principale (8) au cours du mode en carburant liquide ; et
au moins un ensemble de chambre de précombustion (20) en communication fluidique avec la chambre de combustion principale (8) via au moins un passage de transfert de flux (26) généralement orienté vers une région centrale de la chambre de combustion principale (8).
